# EUROPEAN PATENT SPECIFICATION

(11) **EP 1 226 932 B1**
(45) Date of publication and mention of the grant of the patent: **26.04.2006**
(21) Application number: 02001797.6
(22) Date of filing: 25.01.2002
(51) Int. Cl.: B32B 25/08, C08J 5/12, F16F 3/12

(54) **Polyamide-vibration insulating rubber composite body**
Polyamid-Kautschuk schwingungsdämpfendes Element
Polyamide-caoutchouc élément amortisseur de vibrations

(30) Priority: 25.01.2001 JP 2001017535
(43) Date of publication of application: 31.07.2002
(73) Proprietor: TOKAI RUBBER INDUSTRIES, LTD., Komaki-shi, Aichi-ken, 485-8550 (JP)
(72) Inventor: Suzuki, Junichiro, Komaki-shi, Aichi-ken 485-8550 (JP); Katayama, Kazutaka, Komaki-shi, Aichi-ken 485-8550 (JP); Ikeda, Hidehito, Komaki-shi, Aichi-ken 485-8550 (JP); Ikemoto, Ayumu, Komaki-shi, Aichi-ken 485-8550 (JP)
(74) Representative: Frankland, Nigel Howard

(56) References cited:
- EP-A- 0 344 427
- EP-A- 0 659 824
- EP-A- 0 822 064
- US-A- 5 122 420
- US-A- 5 484 848
- PATENT ABSTRACTS OF JAPAN vol. 007, no. 246 (M-253), 2 November 1983 (1983-11-02) & JP 58 132542 A (SUMITOMO KAGAKU KOGYO KK), 6 August 1983 (1983-08-06)

## Description

### BACKGROUND OF THE INVENTION

### Field of the Invention

The present invention generally relates to a polyamide-vibration insulating rubber composite body and, more particularly, to a polyamide-vibration insulating rubber composite body for use as an automotive vibration insulating rubber composite component such as an engine mount.

### Description of the Art

Vibration insulating rubbers to be used for automotive engine mounts are generally required to have a sufficient vibration insulating capability for mitigating vibrations of an engine and accompanying noises, a sufficient resistance to heat generated by the engine, a sufficient supporting capability (strength) for physically supporting the engine, and a sufficient adhesive property for adhesion to a metal material or the like which serves as a support base for the vibration insulating rubber.

In terms of the vibration insulating capability, it is generally preferred that the rubber be soft. When the rubber is too soft, however, the rubber is liable to be deformed by the weight of a component mounted thereon, so that the component is offset from its normal mounting position. This adversely affects the fundamental performance of the entire structure including the mounted component. More specifically, the vibration insulating capability is increased as the spring constant (dynamic spring constant) of the rubber in a vibrating state during transmission of vibrations is reduced. On the other hand, the supporting capability (strength) of the rubber is increased as the static spring constant of the rubber indicative of a support rigidity is increased. Therefore, the vibration insulating rubber has more desirable properties, as the ratio of the dynamic spring constant to the static spring constant (dynamic spring constant/static spring constant), i.e., a dynamic factor, becomes smaller.

Conventionally, a metal support base is employed for the vibration insulating rubber, and the vibration insulating rubber is bonded to the metal support base by vulcanization to produce a metal-vibration insulating rubber composite body. A recent trend is to employ a resin support base instead of the metal support base for weight reduction of the vibration insulating rubber composite body, and to reexamine a production process for reduction of the production costs. In general, a resin-vibration insulating rubber composite body is produced by applying an adhesive on a preliminary molded resin part and bonding a rubber part onto the resin part when the rubber part is vulcanized, or by applying an adhesive on a preliminarily vulcanized rubber part and bonding a resin part onto the rubber part when the resin part is molded.

However, the resin-vibration insulating rubber composite body produced by either of the aforesaid methods suffers from insufficient adhesive strength between the resin part and the vibration insulating rubber part due to uneven application of the adhesive. With the need for an adhesive application step, the production process is complicated and costly, and consideration should be given to the pot life and concentration control of the adhesive. Therefore, stable production of the composite body is difficult. Further, the production process presents a problem associated with environmental pollution because an organic solvent such as toluene is employed as a thinner for the adhesive.

Proposed as one approach to these problems is to combine the rubber part with the resin part without the use of the adhesive. For example, EP 0196407 and EP 0315749 disclose methods for combining a resin part composed of a polyphenylene ether-based (PPE-based) material with a rubber part composed of a rubber vulcanizable by sulfur or a peroxide without the use of an adhesive. However, it is difficult to employ PPE for an automotive component, especially for an automotive rubber vibration insulator, because PPE has poor oil resistance. In addition, the PPE has a poor workability with a high melt viscosity.

Further, EP 0344427 discloses a method for combining a resin part composed of a polyamide-based (PA-based) thermoplastic resin, excellent in oil (solvent) resistance and heat resistance, with a rubber part composed of a rubber having carboxyl groups. However, the rubber to be used is a special rubber having carboxyl groups, and is insufficient in vibration insulating capability and durability. Therefore, it is difficult to employ the rubber as the vibration insulating rubber.

Japanese Unexamined Patent Publication No. 7-11013 (1995) discloses a method for combining a resin part composed of a material containing a polyamide in a proportion of not smaller than 30 wt% with a rubber part composed of a rubber composition containing a silane having a double bond and vulcanized with the use of a peroxide. With this method, a rubber part composed of a rubber composition containing a base rubber selected from various rubbers including EP(D)M rubbers, SB rubbers, butadiene rubbers (BR), natural rubbers (NR), isobutene-isoprene rubbers (IIR), nitrile rubbers (NBR), chloroprene rubbers (CR), styrene-containing block copolymers and polyalkenylenes can be combined with the polyamide part only by vulcanization with the use of the peroxide. The publication states that the resulting composite body is usable for gaskets, casings for motors and electric tools, tires, dampers, and noise and vibration insulators. However, the composite body specifically disclosed in the publication is insufficient in adhesion between the resin part and the rubber part. Therefore, it is difficult to use the composite body as a heat-resistant rubber vibration insulator for mounting an engine.

In view of the foregoing, it is an object of the present invention to provide a polyamide-vibration insulating rubber composite body including a polyamide part and a vibration insulating rubber part advantageously combined with each other in a simple manner without the use of an adhesive.

### SUMMARY OF THE INVENTION

In accordance with the present invention to achieve the aforesaid object, there is provided a polyamide-vibration insulating rubber composite body, which comprises: a polyamide plate; and a rubber part comprising a rubber composition, said rubber part combined with the polyamide plate by vulcanizing (crosslinking) said rubber composition onto the polyamide plate, the rubber composition comprising:
(A) a vibration insulating rubber comprising at least one of an ethylene-propylene-diene terpolymer and an ethylene-propylene copolymer;
(B) a peroxide vulcanizing agent (crosslinking agent);
(C) a resorcinol compound; and
(D) a melamine resin.

The inventors of the present invention conducted intensive studies on rubber compositions to produce a polyamide-vibration insulating rubber composite body comprising a polyamide part and a vibration insulating rubber part combined with each other in a simple manner without the use of an adhesive, and came up with an idea of mixing an adhesive component in the rubber composition. As a result of further research and development on combinations of vibration insulating rubbers and adhesive components which possibly provide an excellent adhesion property, the inventors found that a rubber prepared by mixing a specific adhesive component (a resorcinol compound and a melamine resin) with an ethylene-propylene-diene terpolymer or an ethylene-propylene copolymer, which is less expensive and more excellent in heat resistance and vibration insulating capability than other rubbers, and vulcanizing the resulting rubber composition with the use of a peroxide vulcanizing agent has an excellent adhesion property with respect to a polyamide. Thus, the present invention was attained.

A reason why the rubber prepared from the specific rubber composition has an excellent adhesion property with respect to the polyamide is supposedly as follows. The resorcinol compound mainly serves as an adhesive, and the melamine resin mainly serves as an auxiliary adhesive agent. The melamine resin donates CH₂O to the resorcinol compound, and the CH₂O forms a covalent bond with an acid amide group (-CONH-) of the polyamide for improvement of the adhesion property. For example, CH₂O is donated to resorcinol represented by the formula (C) below from the melamine resin to provide a compound as represented by the formula (C') below, which in turn forms a covalent bond with an acid amide group (-CONH-) of the polyamide to ensure firm adhesion to the polyamide. In addition, hydroxyl groups of resorcinol are partly hydrogen-bonded with acid amide groups of the polyamide, and the hydrogen bonds also contribute to the improvement of the adhesion property.

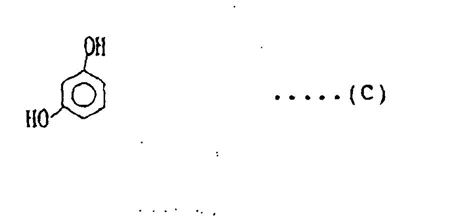

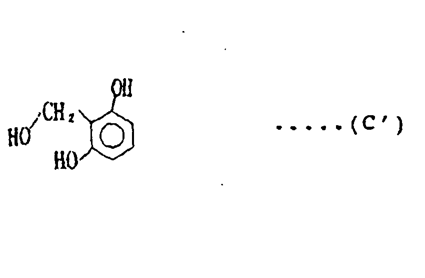

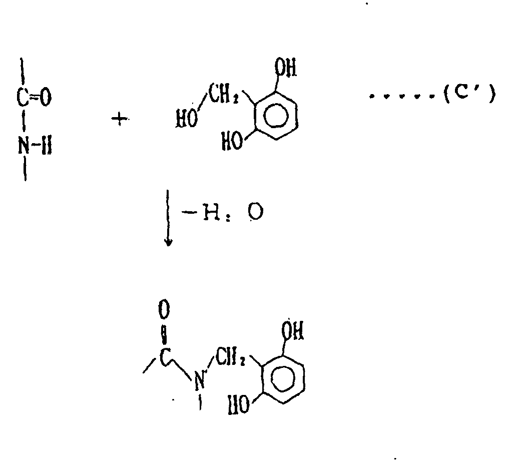

Where the resorcinol compound (C) and the melamine resin (D) are present in the rubber composition in a ratio within a predetermined range, the rubber part has an improved adhesion property with respect to the polyamide part.

Where the resorcinol compound (C) is present in the rubber composition in a proportion within a predetermined range based on the vibration insulating rubber (A), the rubber part has an improved adhesion property with respect to the polyamide part.

### DETAILED DESCRIPTION OF THE PREFERRED EMBODIMENTS

The present invention will hereinafter be described in detail by way of embodiments thereof.

A polyamide-vibration insulating rubber composite body according to the present invention includes a polyamide part, and a rubber part combined with the polyamide part by vulcanizing a specific rubber composition on the polyamide part.

The specific rubber composition comprises: (A) a specific vibration insulating rubber; (B) a peroxide vulcanizing agent; (C) a resorcinol compound; and (D) a melamine resin.

At least one of an ethylene-propylene-diene terpolymer (hereinafter referred to as "EPDM") and an ethylene-propylene copolymer (hereinafter referred to as "EPM") is used as the vibration insulating rubber (A) . The EPDM is not particularly limited as long as it is generally employed as a base material of the rubber composition, but preferably has an iodine value of 5 to 36 and an ethylene ratio of 48 to 75 wt%.

The diene monomer (third component) in the EPDM is not particularly limited, but is preferably a diene monomer having 5 to 20 carbon atoms. Specific examples of the diene monomer include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), 5-butylidene-2-norbornene, 2-methallyl-5-norbornene and 2-isopropenyl-5-norbornene. Among these diene monomers (third component), dicyclopentadiene (DCP) and 5-ethylidene-2-norbornene (ENB) are particularly preferred.

Examples of the peroxide vulcanizing agent (B) to be used in combination with the vibration insulating rubber (A) in the subject rubber composition include 2,4-dichlorobenzoyl peroxide, benzoyl peroxide, 1,1-di-t-butylperoxy-3,3,5-trimethylcyclohexane, 2,5-dimethyl-2,5-dibenzoylperoxyhexane, n-butyl-4,4'-dit-butylperoxyvalerate, dicumyl peroxide, t-butylperoxybenzoate, di-t-butylperoxy-diisopropylbenzene, t-butylcumyl peroxide, 2,5-dimethyl-2,5-di-t-butylperoxyhexane, di-t-butyl peroxide and 2,5-dimethyl-2,5-di-t-butylperoxyhexyne-3, which may be used either alone or in combination. Among these peroxide vulcanizing agents, dicumyl peroxide is particularly preferred, because the properties such as spring property and durability of the resulting rubber part are properly balanced to meet the property requirements for a vibration insulating rubber.

The peroxide vulcanizing agent (B) is preferably present in the rubber composition in a proportion of 1 to 10 parts by weight (hereinafter referred to simply as "parts") based on 100 parts of the vibration insulating rubber (A). If the proportion of the component (B) is smaller than one part, the resulting rubber part tends to have a lower crosslinking density and hence a greater permanent compression set, and also have a poorer adhesion property. If the proportion of the component (B) is greater than 10 parts, the resulting rubber part tends to have an excessively high crosslinking density, a poorer adhesion property and a poorer durability.

The resorcinol compound (C) to be used in combination with the components (A) and (B) is not particularly limited as long as it serves as an adhesive. Examples of the resorcinol compound include modified resorcin-formaldehyde resins, resorcin and resorcin-formaldehyde (RF) resins, which may be used either alone or in combination. Among these resorcinol compounds, the modified resorcin-formaldehyde resins are preferred in terms of evaporability, moisture absorption and compatibility with the rubber.

Specific examples of the preferred modified resorcin-formaldehyde resins include resins represented by the following general formulae (1) to (3), among which the resins represented by the general formula (1) are particularly preferred. 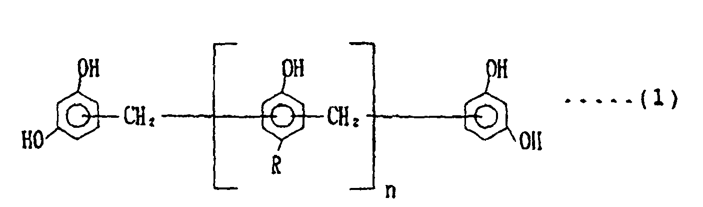 (wherein R is a hydrocarbon group, and n is a positive integer) 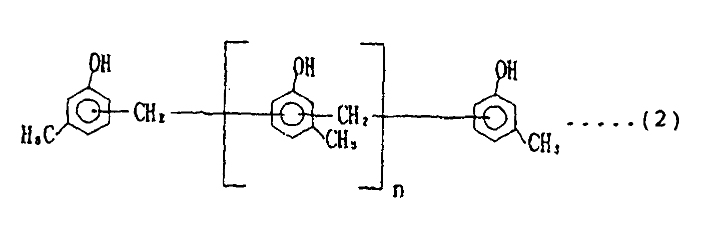 (wherein n is a positive integer) 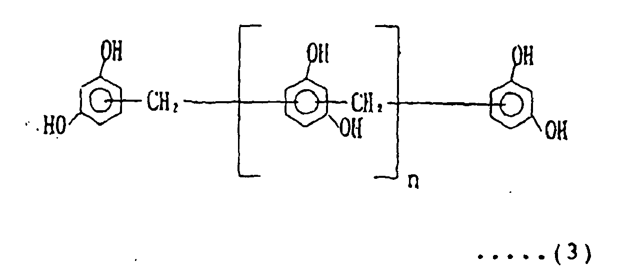 (wherein n is a positive integer)

The resorcinol compound (C) preferably is present in the rubber composition in a proportion of 0.1 to 10 parts, particularly preferably in a proportion of 0.5 to 5 parts, based on 100 parts of the vibration insulating rubber (A). If the proportion of the component (C) is smaller than 0.1 part, the resulting rubber part tends to have a poorer adhesion property with respect to the polyamide part. On the other hand, if the proportion of the component (C) is greater than 10 parts, the physical properties of the rubber may be deteriorated.

The melamine resin (D) to be used in combination with the components (A) to (C) is not particularly limited as long as it serves as an auxiliary adhesive agent. Examples of the melamine resin include methylated formaldehyde-melamine polymers and hexamethylenetetramine, which may be used either alone or in combination. Among melamine resins, the methylated formaldehyde-melamine polymers are particularly preferred in terms of evaporability, moisture absorption and compatibility with the rubber.

Specific examples of the methylated formaldehyde-melamine polymers include polymers represented by the following general formula (4). 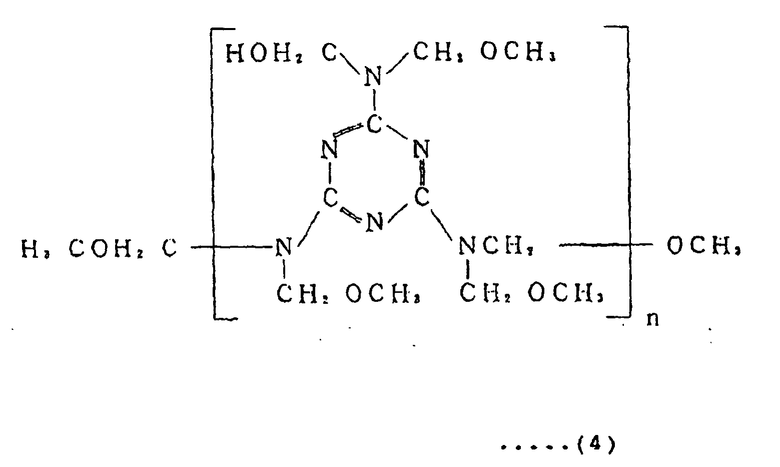 (wherein n is a positive integer)

A mixture of the methylated formaldehyde-melamine polymers represented by the general formula (4) is preferably used as the component (D). It is particularly preferred that the mixture contains methylated formaldehyde-melamine polymers of the general formula (4) wherein n=1, n=2 and n=3 are in proportions of 43 to 44 wt%, 27 to 30 wt% and 26 to 30 wt%, respectively.

The resorcinol compound (C) and the melamine resin (D) preferably are present in the rubber composition in a weight ratio of C/D=1/0.5 to 1/2, particularly preferably C/D=1/0.77 to 1/1.5. If the weight ratio of the component (D) is lower than 0.5, the resulting rubber part tends to have a slightly reduced tensile strength (TB) and extensibility (EB). Even if the weight ratio of the component (D) is higher than 2, the adhesion property plateaus with a constant adhesive strength. Therefore, a further increase in the weight ratio of the component (D) leads to a cost increase with no additional effect.

In addition to the aforesaid components (A) to (D), carbon black, a process oil and the like preferably are blended in the rubber composition.

The carbon black preferably is present in the rubber composition in a proportion of not smaller than 30 parts, particularly preferably 30 to 150 parts, based on 100 parts of the vibration insulating rubber (A).

In addition to the aforesaid components, any of various additives such as an anti-aging agent, a processing aid, a crosslinking accelerator, a white filler, a reactive monomer and a foaming agent may be blended in the rubber composition, as required.

The rubber composition can be prepared by an ordinary method employing the components (A) to (D) and, as required, any of the aforesaid other components. For example, components other than the peroxide vulcanizing agent (B), the resorcinol compound (C) and the melamine resin (D) preliminarily are mixed together, and kneaded at a temperature of 80 to 140°C for several minutes. Thereafter, the peroxide vulcanizing agent (B), the resorcinol compound (C) and the melamine resin (D) additionally are mixed with the resulting mixture. It is noted that the resorcinol compound (C) and the melamine resin (D) may be contained in the preliminary mixture. With the use of mill rolls such as an open mill rolls, the resulting rubber composition is kneaded at a roll temperature of 40 to 70°C for 5 to 30 minutes, and rolled to provide a rubber sheet or ribbon.

The polyamide part of the polyamide-vibration insulating rubber composite body is composed of a polyamide, which is not particularly limited as long as it is a polymer having an acid amide group (-CONH-) in its recurring unit. The following are exemplary polyamides which are classified according to polymerization method used.
(1) Polyamides produced by polycondensation of a diamine and a dibasic acid. Examples of the diamine include aliphatic, alicyclic and aromatic diamines such as hexamethylenediamine, decamethylenediamine, dodecamethylenediamine, 2,2,4- or 2,4,4-trimethylhexamethylenediamine, 1,3- or 1,4-bis(aminomethyl)cyclohexane, bis(p-aminocyclohexylmethane) and m- or p-xylylenediamine. Examples of the dibasic acid include aliphatic, alicyclic and aromatic dicarboxylic acids such as adipic acid, suberic acid, sebacic acid, cyclohexanedicarboxylic acid, terephthalic acid and isophthalic acid.
(2) Crystalline and amorphous polyamides produced by polycondensation of an aminocarboxylic acid. Examples of the aminocarboxylic acid include 6-aminocaproic acid, 11-aminoundecanoic acid and 12-aminododecanoic acid.
(3) Polyamides produced by ring opening polymerization of a lactam. Examples of the lactam include ε-caprolactam and ω-dodecalactam.

Besides the aforesaid polyamides, polyamide copolymers, mixtures of polyamides, and polymer blends of any of the aforesaid polyamides and other resins are usable as the polyamide used in the present invention. More specific examples of the polyamide may include nylon 6, nylon 66, nylon 610, nylon 612, nylon 11, nylon 12, nylon 46, copolymers of nylon 6 and nylon 66, aromatic nylons and amorphous nylons, among which nylon 6, nylon 66 and aromatic nylons are particularly preferred because of their high rigidity and heat resistance. Glass fibers of the type which are conventionally used as additives for polyamides may be blended with the polyamide in the subject rubber composition.

The polyamide-vibration insulating rubber composite body can be produced, for example, by combining the rubber part with the polyamide part by vulcanizing the rubber composition onto the polyamide part without the use of an adhesive. More specifically, the rubber composition (preferably preformed) is extruded onto the polyamide part by extrusion, or molded on the polyamide part by compression molding, transfer molding or injection molding, then pressed on the polyamide part, and then crosslinked by heating. Preferably, the crosslinking temperature is 150 to 180° C, and the crosslinking period is about 3 minutes to about 30 minutes.

In the present invention, a surface of the polyamide part may be subjected to a cleaning process employing an alkaline cleaning agent, or to a wet blasting process employing an alkaline cleaning agent and an abrasive.

The polyamide-vibration insulating rubber composite body thus produced can be used as a variety of automotive vibration insulating rubber composite components, more specifically, as an engine mount, a body mount, a carburetor mount, a member mount, a strut bar cushion, a center bearing support, a torsional damper, a steering rubber coupling, a tension rod bush, a bush, a bound stopper, an engine roll stopper for a front engine - front drive type, a muffler hanger, and the like.

Next, examples of the invention are set forth in the following Examples along with Comparative Examples.

Prior to the description of Examples and Comparative Examples, ingredients employed in these examples will be explained below.

### Vibration insulating rubber (A)-1

EPDM (ESPRENE 505 available from Sumitomo Chemical Co., Ltd., and having an iodine value of 24 and an ethylene ratio of 55 wt%)

### vibration insulating rubber (A)-2

EPM (ESPRENE 201 available from Sumitomo Chemical Co., Ltd.)

### Peroxide vulcanizing agent (B)

Dicumyl peroxide (PERCUMYL D available from NOF Corp.)

### Resorcinol Compound (C)

Modified resorcin-formaldehyde resin represented by the general formula (1) (SUMICANOL 620 available from Sumitomo Chemical Co., Ltd.)

### Melamine resin (D)

Methylated formaldehyde-melamine polymer (SUMICANOL 507A available from Sumitomo Chemical Co., Ltd.)

### Carbon black

SEAST SO available from Tokai Carbon Co.

### Process oil

DIANAPROCESS PW-380 available from Idemitsu Kosan Co., Ltd.

### Vulcanization accelerator 1

Tetramethylthiuram disulfide (SANCELER TT available from Sanshin Chemical Co., Ltd.)

### Vulcanizing accelerator 2

Zinc dimethyldithiocarbamate (SANCELER PZ available from Sanshin Chemical Co., Ltd.)

### Vulcanising agent

Sulfur

### Example 1

Ingredients other than a peroxide vulcanizing agent (B) a resorcinol compound (C) and a melamine resin (D) shown in Table 1 were blended in proportions shown in Table 1, and kneaded at 120 °C for 5 minutes by means of a Banbury mixer. The peroxide vulcanizing agent (B), the resorcinol compound (C) and the melamine resin (D) were additionally blended with the resulting mixture in proportions as shown in Table 1, and the resulting mixture was kneaded at 50°C for 10 minutes by means of open mill rolls. Thereafter, the resulting rubber composition was rolled in a sheet form (size: 60 mm × 30 mm, thickness: 4 mm). A polyamide plate of nylon 66 (size: 60 mm× 25 mm, thickness: 4 mm) was prepared, and Teflon tapes were applied to opposite edge portions (width: 17.5 mm) of the polyamide plate for masking. Then, the rubber composition sheet was brought into contact with a mating surface of the polyamide plate, and heated at 170°C for 30 minutes with the use of a hydraulic press for crosslinking thereof. Thus, the rubber composition sheet was bonded to the mating surface of the polyamide plate (nylon 66) to provide a polyamide-vibration insulating rubber composite body.

### Examples 2 to 6 and Comparative Example 1 and 2

Polyamide-vibration insulating rubber composite bodies were produced in substantially the same manner as in Example 1, except that rubber compositions were prepared by blending ingredients in proportions as shown in Tables 1 and 2.

### Example 7

A polyamide-vibration insulating rubber composite body was produced in substantially the same manner as in Example 1, except that a polyamide plate of an aromatic nylon (nylon 6T) was employed instead of the polyamide plate of nylon 66 and a rubber composition was prepared by blending ingredients in proportions as shown in Table 2.

### Example 8

A polyamide-vibration insulating rubber composite body was produced in substantially the same manner as in Example 1, except that a polyamide plate of nylon 6 was employed instead of the polyamide plate of nylon 66 and a rubber composition was prepared by blending ingredients in proportions as shown in Table 2.

Properties of the polyamide-vibration insulating rubber composite bodies of Examples and Comparative Examples thus produced were evaluated in the following manner. The results of the evaluations are shown in Tables 1 and 2.

### Original state properties

The rubber composition sheets were each crosslinked at 170°C for 20 minutes, and then shaped to provide a dumbbell specimen (JIS K 6250). The breaking strength (TB) and breaking extension (EB) of the specimen were measured in conformity of JIS K 6250. The hardness (HS) of the specimen was also measured in conformity of JIS K 6250.

### Adhesion property

The polyamide-vibration insulating rubber composite bodies were each horizontally retained with the opposite edge portions (masked with the Teflon tapes) of the polyamide plate thereof fixed to a metal plate, and the rubber sheet bonded to the mating surface of the polyamide plate was upwardly pulled at a rate of 50 mm/min to breakage. A breaking load exerted on the rubber sheet at breakage was defined as an adhesion strength (N/mm), and a broken surface state (broken state) was observed for evaluation. For the evaluation of the broken state in Tables 1 and 2, "R100" means that 100% breakage occurred in the rubber part (R), and "P100" means that 100% breakage occurred in the interface between the polyamide part and the rubber part (interface separation).

**Table 1 (parts by weight)**

| | Example | | | | | |
|---|---|---|---|---|---|---|
| | 1 | 2 | 3 | 4 | 5 | 6 |
| EPDM | 100 | 100 | 100 | - | 100 | 100 |
| EPM | - | - | - | 100 | - | - |
| Peroxide vulcanizing agent | 2.0 | 2.0 | 2.0 | 2.8 | 2.0 | 2.0 |
| Resorcinol compound | 0.1 | 3 | 10 | 3 | 1 | 1 |
| Melamine resin | 0.1 | 3 | 10 | 3 | 0.5 | 2 |
| Carbon black | 45 | 45 | 45 | 60 | 45 | 45 |
| Process oil | 20 | 20 | 20 | 20 | 20 | 20 |
| Vulcanizing accelerator(1) | - | - | - | - | - | - |
| Vulcanizing accelerator(2) | - | - | - | - | - | - |
| Sulfur vulcanizing agent | - | - | - | - | - | - |
| TB (MPa) | 16.5 | 16.8 | 12.3 | 10.5 | 16.7 | 16.2 |
| EB (%) | 628 | 612 | 470 | 435 | 620 | 597 |
| Hardness (HS) | 57 | 60 | 68 | 61 | 59 | 60 |
| Adhesive strength (N/mm) | 12.0 | 13.3 | 9.7 | 10.1 | 13.0 | 12.8 |
| Broken state | R100 | R100 | R100 | R100 | PR00 | R100 |

**Table 2 (parts by weight)**

| | Example | | Comparative Example | |
|---|---|---|---|---|
| | 7 | 8 | 1 | 2 |
| EPDM | 100 | 100 | 100 | 100 |
| EPM | - | - | - | - |
| Peroxide vulcanizing agent | 2.0 | 2.0 | 4.2 | - |
| Resorcinol compound | 3 | 3 | - | 3 |
| Melamine resin | 3 | 3 | - | 3 |
| Carbon black | 45 | 45 | 100 | 100 |
| Process oil | 20 | 20 | 60 | 60 |
| Vulcanizing accelerator(1) | - | - | - | 1.5 |
| Vulcanizing accelerator(2) | - | - | - | 1.5 |
| Sulfur vulcanizing agent | - | - | - | 0.5 |
| TB (MPa) | 16.8 | 16.8 | 16.0 | 18.0 |
| EB (%) | 612 | 612 | 635 | 663 |
| Hardness (HS) | 60 | 60 | 57 | 56 |
| Adhesive strength (N/mm) | 13.2 | 13.0 | 0 | 0 |
| Broken state | R100 | R100 | P100 | P100 |

As can be understood from the results shown in Tables 1 and 2, the rubber parts of the composite bodies of the Examples each have excellent original state properties and a very high adhesive strength.

In the case of the composite body of Comparative Example 1, on the contrary, the rubber part was not bonded to the polyamide part, because the rubber composition did not contain the resorcinol compound and the melamine resin as the adhesive component. In the case of the composite body of Comparative Example 2, the rubber part was not bonded to the polyamide part, because the sulfur vulcanizing agent was employed instead of the peroxide vulcanizing agent for the vulcanization.

As described above, the polyamide-vibration insulating rubber composite bodies of the present invention can be produced in a simple manner by combining the vibration insulating rubber part with the polyamide part without the use of an adhesive, because the vibration insulating rubber part is composed of the specific rubber composition which per se has an adhesion property. Without the need for an adhesive applying step, there is no need to give consideration to the pot life and concentration control of the adhesive, so that the composite body can more stably be produced. Without the use of an organic solvent as a thinner for the adhesive, there is no problem associated with environmental pollution. Since the vulcanization is carried out with the use of the peroxide vulcanizing agent rather than a conventional sulfur vulcanizing agent, there is no need to blend zinc oxide in the rubber composition.

Where the resorcinol compound (C) and the melamine resin (D) are present in the rubber composition in a ratio within a predetermined range, the vibration insulating rubber part has an improved adhesion property with respect to the polyamide part.

Where the resorcinol compound (C) is present in the rubber composition in a proportion within a predetermined range based on the vibration insulating rubber (A), the vibration insulating rubber part has an improved adhesion property with respect to the polyamide part.

In the present Specification "comprises" means "includes or consists of" and "comprising" means "including or consisting of".

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A polyamide-vibration insulating rubber composite body comprising:
a polyamide plate; and
a rubber part comprising a rubber composition, said rubber part combined with the polyamide plate by vulcanizing said rubber composition onto the polyamide plate, the rubber composition comprising:
(A) a vibration insulating rubber comprising at least one of an ethylene-propylene-diene Terpolymer and an ethylene-propylene copolymer;
(B) a peroxide vulcanizing agent;
(C) a resorcinol compound; and
(D) a melamine resin.

2. A polyamide-vibration insulating rubber composite body as set forth in claim 1, wherein the resorcinol compound (C) and the melamine resin (D) are present in the rubber composition in a ratio of C/D=1/0.5 to 1/2.

3. A polyamide-vibration insulating rubber composite body as set forth in claim 1 or claim 2, wherein the resorcinol compound (C) is present in the rubber composition in a proportion of 0.1 to 10 parts by weight based on 100 part by weight of the vibration insulating rubber (A).

4. A composite body according to any one of the preceding Claims wherein the rubber composition is formed of an ethylene-propylene-diene terpolymer having an iodine value of 5-36 and an ethylene ratio of 48-75 wt. %.

5. A composite body according to Claim 4 wherein the ethylene-propylene-diene terpolymer is formed from a diene monomer having 5-20 carbon atoms.

6. A composite body according to any one of the preceding Claims wherein the peroxide vulcanising agent is dicumyl peroxide.

7. A composite body according to any one of the preceding Claims wherein the resorcinol compound is a modified resorcin-formaldehyde resin represented by one of the three following general formulae: 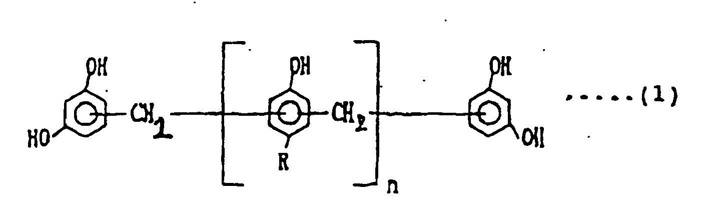 (wherein R is a hydrocarbon group, and n is a positive integer) 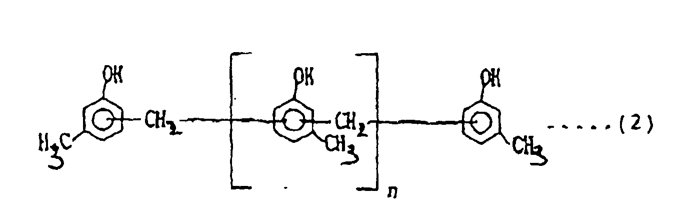 (wherein n is a positive integer) 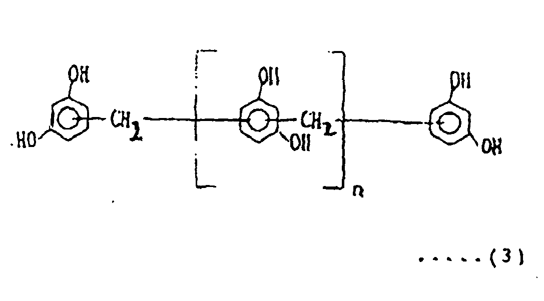 (wherein n is a positive integer)

8. A composite body according to any one of the preceding Claims wherein the melamine resin is selected from methylated formaldehyde-melamine polymers and hexamethylenetetramine, or mixtures thereof.

9. A composite body according to any one of Claims 1 to 7 wherein the melamine resin is a methylated formaldehyde melamine polymer represented by the following general formula: 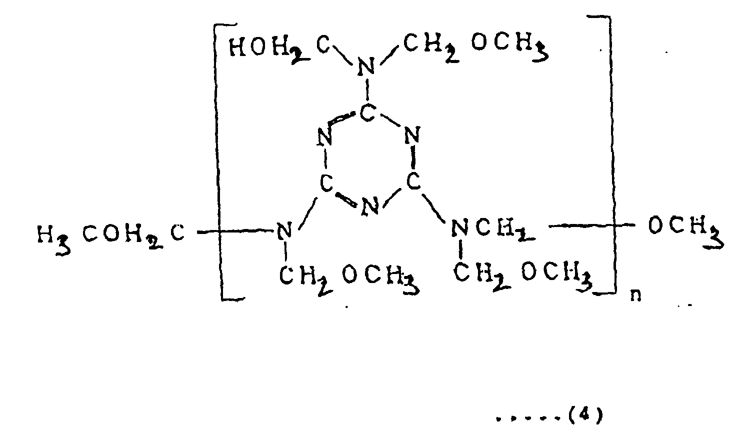 (wherein n is a positive integer)

## Patentansprüche

1. Verbundkörper aus Polyamid und schwingungsdämpfendem Kautschuk, welcher umfaßt:
eine Polyamidplatte; und
ein Kautschukteil, das eine Kautschukzusammensetzung umfaßt, wobei das Kautschukteil mit der Polyamidplatte durch Vulkanisieren der Kautschukzusammensetzung auf der Polyamidplatte verbunden ist, wobei die Kautschukzusammensetzung umfaßt:
(A) einen schwingungsdämpfenden Kautschuk, der wenigstens eines von Ethylen-Propylen-Dien-Terpolymer und Ethylen-Propylen-Copolymer umfaßt;
(B) ein Peroxidvulkanisierungsmittel;
(C) eine Resorcinolverbindung; und
(D) ein Melaminharz.

2. Verbundkörper aus Polyamid und schwingungsdämpfendem Kautschuk nach Anspruch 1, wobei die Resorcinolverbindung (C) und das Melaminharz (D) in der Kautschukzusammensetzung in einem Verhältnis von C/D=1/0,5 bis 1/2 vorliegen.

3. Verbundkörper aus Polyamid und schwingungsdämpferidem Kautschuk nach Anspruch 1 oder Anspruch 2, wobei die Resorcinolverbindung (C) in der Kautschukzusammensetzung in einem Anteil von 0,1 bis 10 Gewichtsteilen basierend auf 100 Gewichtsteilen des schwingungsdämpfenden Kautschuks (A) vorliegt.

4. Verbundkörper nach einem der vorangehenden Ansprüche, wobei die Kautschukzusammensetzung aus einem Ethylen-Propylen-Dien-Terpolymer mit einer Iodzahl von 5-36 und einem Ethylenverhältnis von 48-75 Gew.% gebildet ist.

5. Verbundkörper nach Anspruch 4, wobei das Ethylen-Propylen-Dien-Terpolymer aus einem Dienmonomer mit 5-20 Kohlenstoffatomen gebildet ist.

6. Verbundkörper nach einem der vorangehenden Ansprüche, wobei das Peroxidvulkanisierungsnüttel Dicumylperoxid ist.

7. Verbundkörper nach einem der vorangehenden Ansprüche, wobei die Resorcinolverbindung ein modifiziertes Resorcin-Formaldehyd-Harz ist, das durch eine der drei folgenden allgemeinen Formeln dargestellt ist: 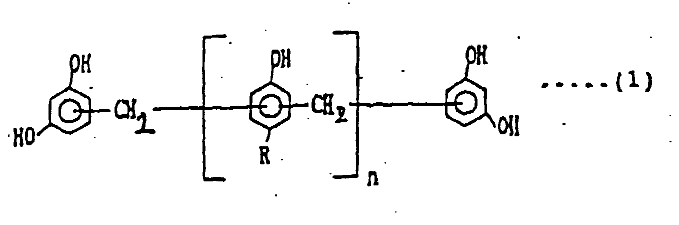 (worin R eine Kohlenwasserstoffgruppe ist und n eine positive ganze Zahl ist) 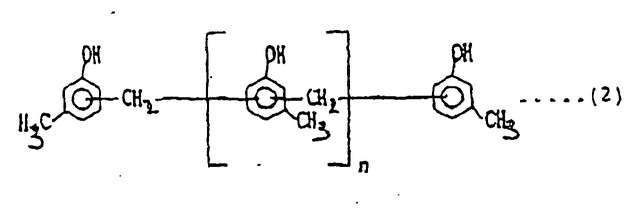 (wobei n eine positive ganze Zahl ist) 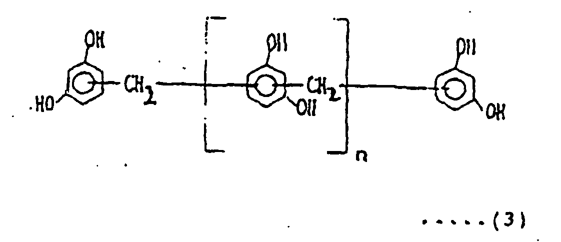 (wobei n eine positive ganze Zahl ist).

8. Verbundkörper nach einem der vorangehenden. Ansprüche, wobei das Melaminharz ausgewählt ist aus methylierten Formaldehyd-Melamin-Polymeren und Hexamethylentetramin, oder Mischungen derselben.

9. Verbundkörper nach einem der Ansprüche 1 bis 7, wobei das Melaminharz ein methyliertes Formaldehyd-Melamin-Polymer ist, das durch die folgende allgemeine Formel dargestellt ist: 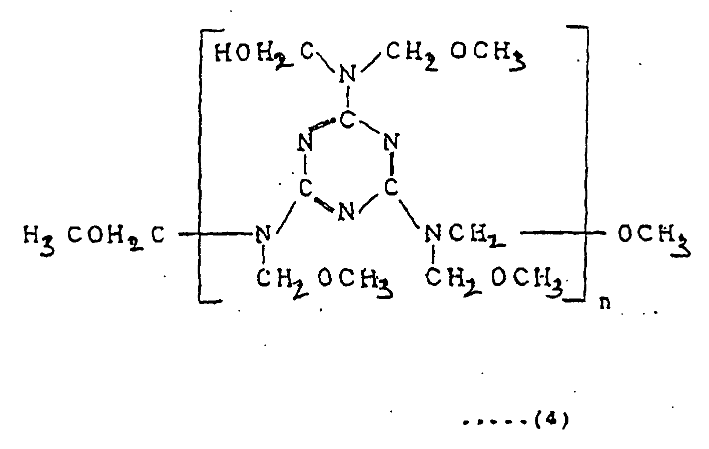 (wobei n eine positive ganze Zahl ist).

## Revendications

1. Corps composite en polyamide-caoutchouc d'isolation contre les vibrations comprenant :
une plaque en polyamide ; et
une partie en caoutchouc comprenant une composition de caoutchouc, ladite partie en caoutchouc étant combinée avec la plaque en polyamide par vulcanisation, la composition de caoutchouc comprenant :
(A) un caoutchouc d'isolation contre les vibrations comprenant au moins un d'un terpolymère d'éthylène-propylène-diène et d'un copolymère d'éthylène-propylène ;
(B) un agent de vulcanisation peroxydique
(C) un composé de resorcinol ; et
(D) une résine mélamine.

2. Corps composite en polyamide-caoutchouc d'isolation contre les vibrations selon la revendication 1, dans lequel le composé de resorcinol (C) et la résine mélamine (D) sont présents dans la composition de caoutchouc en un rapport de C/D = 1/0,5 à 1/2.

3. Corps composite en polyamide-caoutchouc d'isolation contre les vibrations selon les revendications 1 ou 2, dans lequel le composé de resorcinol (C) est présent dans la composition de caoutchouc dans une proportion de 0,1 à 10 parties en poids pour 100 parties en poids de caoutchouc d'isolation contre les vibrations (A).

4. Corps composite selon l'une quelconque des revendications précédentes, dans lequel la composition de caoutchouc est formée d'un terpolymère d'éthylène-propylène-diène ayant un indice d'iode de 5 à 36 et un taux d'éthylène de 48 à 75 % en poids.

5. Corps composite selon la revendication 4, dans lequel le terpolymère d'éthylène-propylène-diène est formé à partir d'un monomère diénique ayant entre 5 et 20 atomes de carbones.

6. Corps composite selon l'une quelconque des revendications précédentes, dans lequel l'agent de vulcanisation peroxydique est du peroxyde de dicumyle.

7. Corps composite selon l'une quelconque des revendications précédentes, dans lequel le composé de resorcinol est une résine résorcine-formaldéhyde représentée par l'une des trois formules générales suivantes : 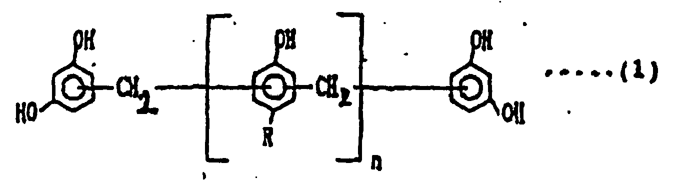 (dans laquelle R est un groupe hydrocarbure, et n est un entier positif) 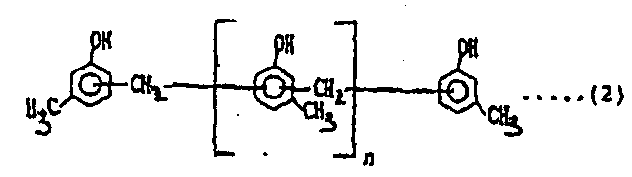 (dans laquelle n est un entier positif) 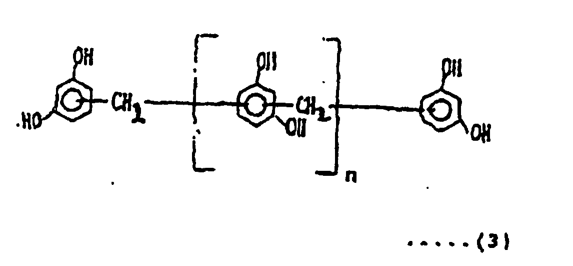 (dans laquelle n est un entier positif)

8. Corps composite selon l'une quelconque des revendications précédentes, dans lequel la résine mélamine est choisie parmi des polymères de formaldéhyde-mélamine méthylés et d'hexaméthylènetetramine, ou des mélanges de ceux-ci.

9. Corps composite selon l'une quelconque des revendications 1 à 7, dans lequel la résine mélamine est un polymère de formaldéhyde-mélamine méthylé représenté par la formule générale suivante : 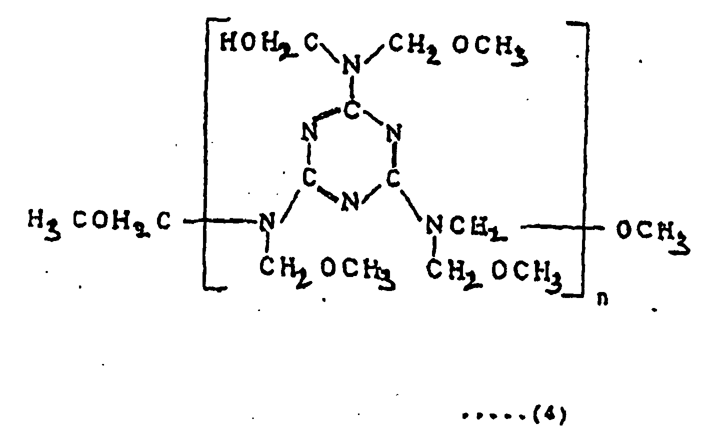 (dans laquelle n est un entier positif).
